# EUROPEAN PATENT SPECIFICATION

(11) **EP 3 337 006 B1**
(45) Date of publication and mention of the grant of the patent: **15.04.2020**
(21) Application number: 17206363.8
(22) Date of filing: 11.12.2017
(51) Int. Cl.: H02H 1/06, H02J 7/00, H02J 9/00

(54) **SWITCHING UNIT WITH SECONDARY POWER SUPPLY**
SCHALTEINHEIT MIT SEKUNDÄRSTROMVERSORGUNG
UNITÉ DE COMMUTATION AYANT UNE ALIMENTATION SECONDAIRE

(30) Priority: 19.12.2016 GB 201621605
(43) Date of publication of application: 20.06.2018
(73) Proprietor: Eaton Intelligent Power Limited, Dublin 4 (IE)
(72) Inventor: DRABEK, Tomas, 15500 Prague (CZ); GABRIEL, Adam, 16500 Prague (CZ)
(74) Representative: Eaton IP Group EMEA

(56) References cited:
- EP-A1- 2 365 507
- WO-A1-03/056677
- US-A1- 2008 150 365
- US-A1- 2016 301 204

## Description

### Field of the invention

The present invention relates to a switching unit, such as a circuit breaker, with a secondary power supply. More particularly, the present invention relates to an electronic switching device having a primary terminal set for connecting to a power line (e.g. the utility grid) and a secondary terminal set for connecting to a load, and one or more switching components for connecting the secondary terminal set to the primary terminal set. The electronic switching device further comprises a primary power supply providing supply power to a control unit, the control unit being arranged to control the one or more switching components.

### Background art

International patent publication WO2014/137440 discloses a display unit for use with a circuit breaker, wherein the display unit comprises a secondary power source. The secondary power source may be a capacitor, a battery, or an energy harvesting component. The energy harvesting component is disclosed as a photovoltaic cell or a thermoelectric generator. This document is teaching only implementations for supplying (secondary) power to a display unit associated with a circuit breaker, not to powering the circuit breaker components as such.

German patent publication DE-A-10 2005 047042 discloses a protective circuit breaker which has an energy reservoir for a release unit, which is fed by a supply unit. The energy reservoir is charged during connection to a supply side in order to allow operation of the release unit when the circuit breaker is not connected anymore to the supply side. Other electronic switching devices are known from US 2016/301204 A1 and US 2008/150365 A1.

### Summary of the invention

The present invention seeks to provide an improved operation capability of an electronic switching device such as a (smart) circuit breaker. Such a smart electronic switching device is usually provided with a control unit in the form of e.g. a processor with appropriate interfacing to sensors and actuators, and may need operating power even after the electronic switching device (or the load connected to the electronic switching device) is electrically separated from the primary power supply.

According to the present invention, an electronic switching device as defined above is provided, the electronic switching device further comprising a secondary power supply arranged to convert mechanical energy into electrical energy, and connected to the control unit for providing supply power. The present invention is defined in claim 1.

Mechanical energy may be available in many forms, and can be transformed into electrical energy when needed to maintain a (limited) operation of the electronic switching device. This is sufficient to e.g. provide signalling information to a human operator, or to allow safety related operation of the electronic switching device (e.g. switching off a load under controlled circumstances). There is no need for a regular check-up or recharging of electrically stored energy as in the prior art electronic switching devices.

### Short description of drawings

The present invention will be discussed in more detail below, with reference to the attached drawings, in which
Fig. 1 shows a circuit diagram of an electronic switching device according to an embodiment of the present invention;
Fig. 2 shows a schematic view of an electronic switching device according to a further embodiment of the present invention; and
Fig. 3 shows a schematic view of an electronic switching device according to an even further embodiment of the present invention.

### Description of embodiments

The present invention embodiments provide a solution for powering up and operating an electronic switching device such as a circuit breaker when electrical energy from a regular source is not available.

Typically circuit breakers or similar devices gain electric power from electric current which flows through the device. When this current doesn't flow because of any reason (trip, no load, etc.), electric power is not available for the device. In some cases a battery is used as a backup power supply, but this leads to many complications, especially maintenance of the battery and battery lifetime. This results to compromises between maintenance of the device and functionalities which is not available without electric power.

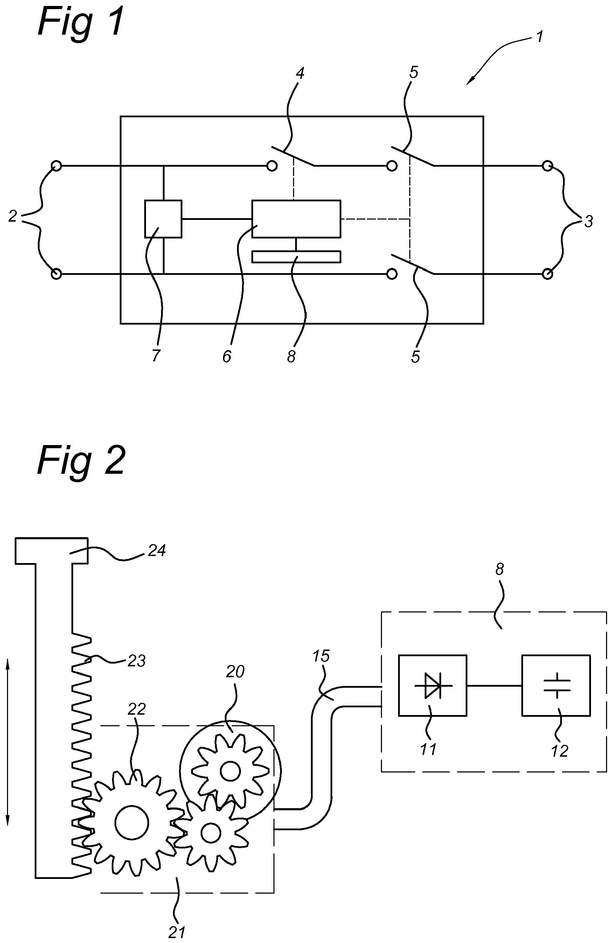

According to the present invention embodiments, electrical power needed for operation of the electronic switching device 1 (when not connected to a primary (regular) power source) is gained from mechanical energy. A circuit diagram of a first embodiment of the present invention is shown in Fig. 1. In this case the electronic switching device 1 is a circuit breaker having a primary terminal set 2 for connecting to a power line (e.g. a utility grid connection) and a secondary terminal set 3 for connecting to a load. One or more switching components 4, 5 are provided for connecting the secondary terminal set 3 to the primary terminal set 2, i.e. to connect the load to the power line. The electronic switching device 1 further comprises a primary power supply 7 providing supply power to a control unit 6 which is arranged to control the one or more switching components 4, 5. As shown in the circuit diagram of Fig. 1, the primary power supply 7 is connected to the primary terminal set 2. The electronic switching device 1 further comprises a secondary power supply 8 arranged to convert mechanical energy into electrical energy which is connected to the control unit 6 for providing supply power to the control unit 6, in case the primary power supply 7 is not able to provide the supply power. The control unit 6 e.g. comprises a processing unit with appropriate interfacing to sensors and actuators, thus making the electronic switching device 1 a 'smart' device.

It is noted that in the embodiment shown in Fig. 1, the electronic switching device 1 is a circuit breaker, and the one or more switching components comprise a load switch 4 and (optionally) two galvanic separation switches 5. The control unit is connected to the load switch 4 and/or the optional galvanic separation switches 5 for controlling actuation thereof.

According to the present invention embodiments, the mechanical energy which is transformed into electrical energy (supply power) can be gained from many different sources either from within the electronic switching device 1 itself (internally) or from outside of the electronic switching device 1 (externally). The mechanical energy can be stored as a potential mechanical energy (e.g. in spring) or it can be directly used. According to the present invention, the mechanical energy is stored in a spring. The mechanical energy can be released and transformed to electrical energy at the time when the electronic switching device 1 needs to be powered (and a primary power supply 7 is not available). The electrical power thus provided can be used for a start-up sequence of the control unit 6 (in a smart circuit breaker), as well as operation of the entire electronic switching device 1.

In a specific embodiment, the control unit 6 is arranged to operate in a limited functionality mode when receiving supply power from the secondary power supply 8. This would allow to have a sufficient functionality of the electronic switching device 1 even when the available mechanical energy is of a limited quantity. In one specific embodiment, the limited functionality mode comprises safety related switch operations and/or status signalling of the electronic switching device 1. E.g. the control unit 6 can then be arranged to only drive LED indicators, to power an external display, or a communication interface. Additionally or alternatively, the limited functionality mode comprises a time limited functionality, i.e. only a temporary or intermittently functioning of the electronic switching device 1. By not using the secondary power supply 8 continuously, it is possible to more efficiently use the available mechanical energy.

In one group of embodiments, the secondary power supply 8 is arranged to receive the mechanical energy from an external source. E.g. a mechanical coupling may be available for a crank or other type of mechanical drive component, in combination with an electrical generator. If (safety) operation is needed, a locally present human operator can make the mechanical connection thus generating the supply power needed for operation of the electronic switching device 1.

Fig. 2 shows a schematic view of a further embodiment of the present invention. This embodiment is an implementation of a group of embodiments, wherein the secondary power supply 8 is arranged to receive the mechanical energy from an internal source located in the electronic switching device 1. The internal source of mechanical energy is e.g. structurally positioned within or attached to a housing of the electronic switching device 1. In all of these embodiment, the secondary power supply 8 comprises a generator 20 arranged to convert mechanical motion into electrical energy.

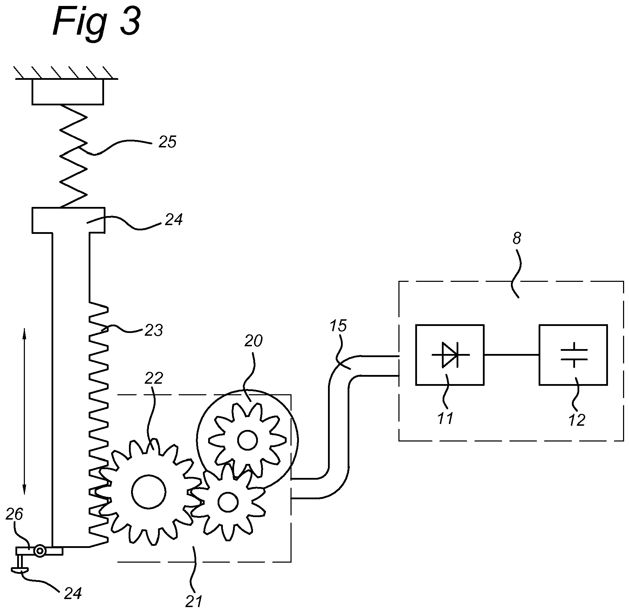

In the specific embodiment shown in Fig. 2, the electronic switching device 1 comprises a mechanical actuator 24, e.g. as indicated in the form of a (push) button, mechanically connected to the generator 20. The scope of the claimed invention is restricted to a mechanical actuator 24 comprising a spring for providing stored mechanical energy as described in the embodiment of Fig. 3. The mechanical actuator 24 is connected to a gear unit 21 arranged to convert a linear movement of the mechanical actuator 24 to a rotating movement for the generator 20. In the implementation shown in Fig. 2, the button 24 is provided with teeth 23 in a linear arrangement, which cooperate with a cog 22 of the gear unit 21 to eventually drive the generator 20.

The generator 20 is then connected at its output to the secondary power supply unit 8 (via the connecting leads 15 as shown in the embodiments of both Fig. 2 and Fig. 3). The secondary power supply 8 may comprise a power storage component 12, e.g. in the form of a battery, or a capacitor bank. Furthermore, the secondary power supply 8 comprises a rectifier unit 11 connected to an output of the generator 20, in order to convert the AC electrical energy into DC electrical currency which can be stored in the power storage component 12.

Specific for the embodiments exemplified by the embodiment of Fig. 2, the basic principle is to use energy from pushing or pulling of the button 24 by a human operator and then transform this energy into electrical energy which can be used for powering up the electronic switching device 1, possibly only for a short time (e.g. to start a microcontroller based version of the control unit 6, and allow signalling e.g. using a flashing LED).

Fig. 3 shows a schematic view of yet a further embodiment of the present invention, wherein the secondary power supply 8 is arranged to convert internally stored mechanical energy into electrical energy. As shown in Fig. 3, the mechanical actuator 24 (which in the Fig. 2 embodiment drives the gear unit 21) is replaced by a combination of a push button implementation of the mechanical actuator 24, a latch 26 and a spring 25. The mechanical actuator 24 may thus be seen as a combination of the push button, latch 26 and a spring 25 which provides the stored mechanical energy. As in the embodiment of Fig. 2, teeth 23 are provided which drive a cog 22 of the gear unit 21. Other types of stored mechanical energy, e.g. a watch type of wound coil, or other pre-biased spring type mechanical energy accumulator may be used. Furthermore, the mechanical actuator 24 comprises a latch 26 for blocking the spring 25, until the stored mechanical energy is needed to be converted into electrical energy. When the electronic switching device 1 is embodied as a circuit breaker, the spring 25 may be charged during a tripping event of the circuit breaker and captured or secured by the latch 26. Mechanical energy will be released by releasing the latch 26 by the human operator by actuating the push button 24 and transformed into electrical energy at the time when the electronic switching device needs to be powered.

The present invention has been described above with reference to a number of exemplary embodiments as shown in the drawings. Modifications and alternative implementations of some parts or elements are possible within the scope of protection as defined in the appended claims.

## Claims

1. Electronic switching device (1) having a primary terminal set (2) for connecting to a power line and a secondary terminal set (3) for connecting to a load, one or more switching components (4, 5) for connecting the secondary terminal set (3) to the primary terminal set (2), and a control unit (6) arranged to control the one or more switching components (4, 5),
wherein the electronic switching device (1) further comprises a primary power supply (7) configured to provide supply power to the control unit (6), the electronic switching device (1) further comprising a secondary power supply (8) connected to the control unit (6) for providing supply power to the control unit (6), the electronic switching device (1) further comprising a mechanical actuator (24) and a gear unit (21), the secondary power supply (8) comprising a generator (20) arranged to convert mechanical motion into electrical energy, wherein the mechanical actuator (24) is mechanically connected to the gear unit (21) and the gear unit (21) is arranged to convert a linear movement of the mechanical actuator (24) to a rotating movement for the generator (20),
**characterized in that**
the mechanical actuator (24) comprises a spring (25) configured to provide stored mechanical energy (20).

2. Electronic switching device (1) according to claim 1, wherein the electronic switching device (1) is a circuit breaker, and the one or more switching components comprise a load switch (4) and optionally galvanic separation switches (5), the control unit (6) being connected to the load switch (4) and/or the optional galvanic separation switches (5) for controlling actuation thereof.

3. Electronic switching device (1) according to claim 1 or 2, wherein the control unit (6) is arranged to operate in a limited functionality mode when receiving supply power from the secondary power supply (8).

4. Electronic switching device (1) according to claim 3, wherein the limited functionality mode comprises safety related switch operations and/or status signalling.

5. Electronic switching device (1) according to claim 3 or 4, wherein the limited functionality mode comprises time limited functionality.

6. Electronic switching device (1) according to any one of claims 1-5, wherein the secondary power supply (8) is arranged to receive the mechanical energy from an external source.

7. Electronic switching device (1) according to any one of claims 1-5, wherein the secondary power supply (8) is arranged to receive the mechanical energy from an internal source located in the electronic switching device (1).

8. Electronic switching device (1) according to any one of claims 1-7, wherein the secondary power supply (8) is arranged to convert internally stored mechanical energy into electrical energy.

9. Electronic switching device (1) according to claim 1, wherein the mechanical actuator (24) comprises a latch (26) for blocking the spring (25).

10. Electronic switching device (1) according to any one of claims 1-9, wherein the secondary power supply (8) comprises a power storage component (12).

11. Electronic switching device (1) according to any one of claims 1-10, wherein the secondary power supply (8) comprises a rectifier unit (11) connected to an output of the generator (20).

## Patentansprüche

1. Elektronische Schaltvorrichtung (1) mit einem primären Anschlussklemmensatz (2) zur Verbindung mit einer Stromleitung und einem sekundären Anschlussklemmensatz (3) zur Verbindung mit einer Last, einer oder mehreren Schaltkomponenten (4, 5) zur Verbindung des sekundären Anschlussklemmensatzes (3) mit dem primären Anschlussklemmensatz (2), und einer Steuereinheit (6), die dafür eingerichtet ist, die eine oder mehreren Schaltkomponenten (4, 5) zu steuern,
wobei die elektronische Schaltvorrichtung (1) ferner eine primäre Stromversorgung (7) umfasst, die konfiguriert ist, um die Steuereinheit (6) mit Strom zu versorgen,
wobei die elektronische Schaltvorrichtung (1) ferner eine sekundäre Stromversorgung (8) umfasst, die mit der Steuereinheit (6) verbunden ist, um die Steuereinheit (6) mit Strom zu versorgen,
wobei die elektronische Schaltvorrichtung (1) ferner ein mechanisches Betätigungselement (24) und eine Getriebeeinheit (21) umfasst, wobei die sekundäre Stromversorgung (8) einen Generator (20) umfasst, der dafür eingerichtet ist, mechanische Bewegung in elektrische Energie umzuwandeln, wobei das mechanische Betätigungselement (24) mechanisch mit der Getriebeeinheit (21) verbunden ist und die Getriebeeinheit (21) dafür eingerichtet ist, eine lineare Bewegung des mechanischen Betätigungselements (24) in eine Drehbewegung für den Generator (20) umzuwandeln, **dadurch gekennzeichnet, dass** das mechanische Betätigungselement (24) eine Feder (25) umfasst, die konfiguriert ist, um gespeicherte mechanische Energie (20)bereitzustellen.

2. Elektronische Schaltvorrichtung (1) nach Anspruch 1, wobei die elektronische Schaltvorrichtung (1) ein Leistungsschutzschalter ist, und die eine oder mehreren Schaltkomponenten einen Lastschalter (4) und optional galvanische Trennschalter (5) umfassen, wobei die Steuereinheit (6) mit dem Lastschalter (4) und/oder den optionalen galvanischen Trennschaltern (5) zum Steuern von deren Betätigung verbunden ist.

3. Elektronische Schaltvorrichtung (1) nach Anspruch 1 oder 2, wobei die Steuereinheit (6) dafür eingerichtet ist, in einem Modus mit begrenzter Funktionalität zu arbeiten, wenn sie Versorgungsstrom von der sekundären Stromversorgung (8) empfängt.

4. Elektronische Schaltvorrichtung (1) nach Anspruch 3, wobei der Modus mit begrenzter Funktionalität sicherheitsbezogene Schaltoperationen und/oder Statussignalisierung umfasst.

5. Elektronische Schaltvorrichtung (1) nach Anspruch 3 oder 4, wobei der Modus mit begrenzter Funktionalität zeitlich begrenzte Funktionalität umfasst.

6. Elektronische Schaltvorrichtung (1) nach einem der Ansprüche 1 bis 5, wobei die sekundäre Stromversorgung (8) dafür eingerichtet ist, die mechanische Energie von einer externen Quelle zu empfangen.

7. Elektronische Schaltvorrichtung (1) nach einem der Ansprüche 1 bis 5, wobei die sekundäre Stromversorgung (8) dafür eingerichtet ist, die mechanische Energie von einer internen Quelle zu empfangen, die sich in der elektronischen Schaltvorrichtung (1) befindet.

8. Elektronische Schaltvorrichtung (1) nach einem der Ansprüche 1 bis 7, wobei die sekundäre Stromversorgung (8) dafür eingerichtet ist, intern gespeicherte mechanische Energie in elektrische Energie umzuwandeln.

9. Elektronische Schaltvorrichtung (1) nach Anspruch 1, wobei das mechanische Betätigungselement (24) einen Riegel (26) zum Arretieren der Feder (25) umfasst.

10. Elektronische Schaltvorrichtung (1) nach einem der Ansprüche 1 bis 9, wobei die sekundäre Stromversorgung (8) eine Leistungsspeicherkomponente (12) umfasst.

11. Elektronische Schaltvorrichtung (1) nach einem der Ansprüche 1 bis 10, wobei die sekundäre Stromversorgung (8) eine Gleichrichtereinheit (11) umfasst, die mit einem Ausgang des Generators (20) verbunden ist.

## Revendications

1. Dispositif de commutation électronique (1) présentant un ensemble de bornes principales (2) permettant de se connecter à une ligne électrique et un ensemble de bornes secondaires (3) permettant de se connecter à une charge, un ou plusieurs composants de commutation (4, 5) permettant de connecter l'ensemble de bornes secondaires (3) à l'ensemble de bornes principales (2), et une unité de commande (6) agencée pour commander les un ou plusieurs composants de commutation (4, 5),
dans lequel le dispositif de commutation électronique (1) comprend en outre une alimentation en puissance principale (7) configurée pour fournir une puissance d'alimentation à l'unité de commande (6), le dispositif de commutation électronique (1) comprenant en outre une alimentation en puissance secondaire (8) connectée à l'unité de commande (6) pour fournir une puissance d'alimentation à l'unité de commande (6), le dispositif de commutation électronique (1) comprenant en outre un actionneur mécanique (24) et une unité à engrenage (21), l'alimentation en puissance secondaire (8) comprenant un générateur (20) agencé pour convertir un mouvement mécanique en énergie électrique, dans lequel l'actionneur mécanique (24) est connecté mécaniquement à l'unité à engrenage (21) et l'unité à engrenage (21) est agencée pour convertir un mouvement linéaire de l'actionneur mécanique (24) en un mouvement rotatif pour le générateur (20),
**caractérisé en ce que**
l'actionneur mécanique (24) comprend un ressort (25) configuré pour fournir une énergie mécanique stockée (20).

2. Dispositif de commutation électronique (1) selon la revendication 1, dans lequel le dispositif de commutation électronique (1) est un disjoncteur, et les un ou plusieurs composants de commutation comprennent un commutateur de charge (4) et facultativement des commutateurs de séparation galvanique (5), l'unité de commande (6) étant connectée au commutateur de charge (4) et/ou aux commutateurs de séparation galvanique facultatifs (5) pour commander l'actionnement de ceux-ci.

3. Dispositif de commutation électronique (1) selon la revendication 1 ou 2, dans lequel l'unité de commande (6) est agencée pour fonctionner dans un mode à fonctionnalité limitée lors de la réception de la puissance d'alimentation en provenance de l'alimentation en puissance secondaire (8).

4. Dispositif de commutation électronique (1) selon la revendication 3, dans lequel le mode à fonctionnalité limitée comprend des opérations de commutateur en lien avec la sécurité et/ou une signalisation de statut.

5. Dispositif de commutation électronique (1) selon la revendication 3 ou 4, dans lequel le mode à fonctionnalité limitée comprend une fonctionnalité limitée dans le temps.

6. Dispositif de commutation électronique (1) selon l'une quelconque des revendications 1-5, dans lequel l'alimentation en puissance secondaire (8) est agencée pour recevoir l'énergie mécanique en provenance d'une source externe.

7. Dispositif de commutation électronique (1) selon l'une quelconque des revendications 1-5, dans lequel l'alimentation en puissance secondaire (8) est agencée pour recevoir l'énergie mécanique en provenance d'une source interne située dans le dispositif de commutation électronique (1).

8. Dispositif de commutation électronique (1) selon l'une quelconque des revendications 1-7, dans lequel l'alimentation en puissance secondaire (8) est agencée pour convertir une énergie mécanique stockée en interne en énergie électrique.

9. Dispositif de commutation électronique (1) selon la revendication 1, dans lequel l'actionneur mécanique (24) comprend un verrou (26) permettant de bloquer le ressort (25).

10. Dispositif de commutation électronique (1) selon l'une quelconque des revendications 1-9, dans lequel l'alimentation en puissance secondaire (8) comprend un composant de stockage de puissance (12).

11. Dispositif de commutation électronique (1) selon l'une quelconque des revendications 1-10, dans lequel l'alimentation en puissance secondaire (8) comprend une unité redresseur (11) connectée à une sortie du générateur (20).
